(19) Europäisches Patentamt

European Patent Office

Office européen des brevets

(11) EP 1 038 883 A1

(12) DEMANDE DE BREVET EUROPEEN

(43) Date de publication:
27.09.2000 Bulletin 2000/39

(51) Int. Cl.$^7$: C08F 4/622, C08F 10/00

(21) Numéro de dépôt: 00200846.4

(22) Date de dépôt: 09.03.2000

(84) Etats contractants désignés:
AT BE CH CY DE DK ES FI FR GB GR IE IT LI LU MC NL PT SE
Etats d'extension désignés:
AL LT LV MK RO SI

(30) Priorité: 24.03.1999 BE 9900207

(71) Demandeur:
SOLVAY POLYOLEFINS EUROPE - BELGIUM
(Société Anonyme)
1050 Bruxelles (BE)

(72) Inventeurs:
• Siberdt, Fabian
1090 Bruxelles (BE)
• Francois, Philippe
1490 Court-Saint-Etienne (BE)
• Paye, Stéphane
5310 Leuze (BE)

(74) Mandataire:
Destryker, Elise Martine et al
Solvay Polyolefins Europe-Belgium
(Société Anonyme)
Département de la Propriété Industrielle
310, rue de Ransbeek
1120 Bruxelles (BE)

(54) **Procédé pour la polymérisation des alpha-oléfines**

(57) Procédé de polymérisation d'alpha-oléfines dans lequel on met on contact, dans des conditions polymérisantes, au moins une alpha-oléfine avec un système catalytique comprenant

(a) un solide catalytique comprenant (i) un composé d'un métal de transition des groupes 4 à 6 du Tableau Périodique contenant au moins un ligand cyclopentadiénique pouvant être substitué, (ii) un activateur choisi parmi les aluminoxanes et les agents ionisants et (iii) un support polymérique poreux, et,
(b) au moins un composé organoaluminium répondant à la formule générale $R_{3-n}Al(Y')_n$ dans laquelle $0,9 < n \leq 3$; Y' représente un groupement choisi parmi -OR', -SR' et -NR'R''; R et R' représentent, indépendamment, un groupe alkyle comprenant de 1 à 20 atomes de carbone, un groupe aryle, alkylaryle ou arylalkyle comprenant de 6 à 30 atomes de carbone, et R'' représente un atome d'hydrogène, un groupe alkyle comprenant de 1 à 20 atomes de carbone, un groupe aryle, alkylaryle ou arylalkyle comprenant de 6 à 30 atomes de carbone.

EP 1 038 883 A1

**Description**

La présente invention concerne un procédé pour la polymérisation des alpha-oléfines.

Il est connu de polymériser les alpha-oléfines au moyen de solides catalytiques comprenant un composé de métal de transition contenant un ou plusieurs ligands cyclopentadiényles, un aluminoxane et un support. La demande de brevet EP-A-0206794 décrit un procédé de polymérisation de l'éthylène dans lequel un tel solide catalytique est utilisé conjointement avec du méthylaluminoxane ou du triéthylaluminium, ajoutés dans le milieu de polymérisation afin d'y capter les poisons, tels que l'oxygène et l'eau. Un tel procédé conduit à la fabrication, avec des rendements catalytiques peu élevés, de polyéthylènes ayant un faible poids spécifique apparent (PSA), ce qui nuit à la productivité des installations de polymérisation.

La demande de brevet EP-A-314797 décrit un procédé de polymérisation de l'éthylène au moyen d'un catalyseur supporté à base d'un composé contenant des ligands cyclopentadiéniques, un alumoxane et un dialkylaluminiumalkoxyde. Un tel procédé conduit à la fabrication, avec des rendements catalytiques peu élevés, de résines contenant beaucoup de fines.

On a maintenant trouvé un procédé de polymérisation ne présentant pas les inconvénients précités et qui permet d'obtenir avec des rendements catalytiques plus élevés des polymères d'$\alpha$-oléfines ayant un PSA nettement plus élevé que celui obtenu dans les procédés connus.

A cet effet, la présente invention concerne un procédé de polymérisation d'alpha-oléfines dans lequel on met en contact, dans des conditions polymérisantes, au moins une alpha-oléfine avec un système catalytique comprenant

(a) un solide catalytique comprenant (i) un composé d'un métal de transition des groupes 4 à 6 du Tableau Périodique contenant au moins un ligand cyclopentadiénique pouvant être substitué, (ii) un activateur choisi parmi les aluminoxanes et les agents ionisants et (iii) un support polymérique poreux ayant un volume poreux intraparticulaire généré par les pores de rayon de 1000 à 75000 Å d'au moins 0,2 cm$^3$/g, et,

(b) au moins un composé organoaluminium répondant à la formule générale $R_{3-n}Al(Y')_n$ dans laquelle $0,9 < n \leq 3$; Y' représente un groupement choisi parmi -OR', -SR' et -NR'R''; R et R' représentent, indépendamment, un groupe alkyle comprenant de 1 à 20 atomes de carbone, un groupe aryle, alkylaryle ou arylalkyle comprenant de 6 à 30 atomes de carbone, et R'' représente un atome d'hydrogène, un groupe alkyle comprenant de 1 à 20 atomes de carbone, un groupe aryle, alkylaryle ou arylalkyle comprenant de 6 à 30 atomes de carbone.

Selon la présente invention, on entend par alpha-oléfine, les oléfines à insaturation terminale contenant de 2 à 20, de préférence de 2 à 8 atomes de carbone telles que plus particulièrement l'éthylène, le propylène, le 1-butène, le 1-pentène, le 1-hexène, le 1-octène.

Le solide catalytique (a) utilisé dans le procédé selon la présente invention comprend le composé de métal de transition (i) et l'activateur (ii) sur le support (iii). Il va de soi que des composés autres que les composés (i) et (ii) peuvent être supportés sur le support (iii). De même, plusieurs composés (i) et/ou (ii) peuvent être supportés sur un même support.

Le composé de métal de transition (i) utilisable selon la présente invention est le plus souvent choisi parmi les composés de formules

$$Q_a \, (C_5H_{5-a-b}R^1_b)(C_5H_{5-a-c}R^2_c) \, Me \, X \, Y \qquad (1)$$

et

$$Q'_a(C_5H_{5-a-d}R^3_d) \, Z \, Me \, X \, Y \qquad (2)$$

dans lesquelles

- Q représente un groupe de liaison bivalent entre les deux ligands cyclopentadiéniques $(C_5H_{5-a-b}R^1_b)$ et $( C_5H_{5-a-c}R^2_c)$,
- Q' représente un groupe de liaison bivalent entre le ligand cyclopentadiénique $(C_5H_{5-a-d}R^3_d)$ et le groupe Z,
- a vaut 0 ou 1,
- b, c et d sont des nombres entiers satisfaisant aux conditions $0 \leq b \leq 5$, $0 \leq c \leq 5$ et $0 \leq d \leq 5$ quand a vaut 0 et $0 \leq b \leq 4$, $0 \leq c \leq 4$ et $0 \leq d \leq 4$ quand a vaut 1,
- $R^1$, $R^2$ et $R^3$ représentent chacun des groupes hydrocarbonés contenant de 1 à 20 atomes de carbone pouvant être reliés au cycle cyclopentadiénique sous la forme d'un groupe monovalent ou pouvant être reliés l'un à l'autre de manière à former un cycle adjacent au cycle cyclopentadiénique, des atomes d'halogène, des groupes alcoxy ayant de 1 à 12 atomes de carbone, des groupes hydrocarbonés contenant du silicium de formule $-Si(R^4)(R^5)(R^6)$, des groupes hydrocarbonés phosphorés de formule $-P(R^4)(R^5)$, des groupes hydrocarbonés azotés de formule $-N(R^4)(R^5)$ ou des groupes hydrocarbonés contenant du bore de formule $-B(R^4)(R^5)$ dans lesquelles $R^4$, $R^5$ et $R^6$ représentent des groupes hydrocarbonés contenant de 1 à 24 atomes de carbone, pour autant que quand b, c ou d vaut 2 ou plus et/ou qu'il existe une pluralité de groupes $R^1$, $R^2$ ou $R^3$, ces derniers peuvent être identiques ou différents,
- Me représente un métal de transition des groupes 4 à 6 du Tableau Périodique,
- Z représente un atome d'oxygène, un atome de soufre, un groupe alcoxy ou thioalcoxy ayant de 1 à 20 atomes de carbone, un groupe hydrocarboné azoté ou phosphoré ayant de 1 à 40 atomes de carbone ou un groupe hydrocarboné contenant de 1 à 20 atomes de carbone, pour autant qu'une liaison du groupe Z soit liée au poupe Q' quand a vaut 1, et

- X et Y, identiques ou différents, représentent chacun un atome d'hydrogène, un atome d'halogène, un groupe hydrocarboné, un groupe alcoxy, un groupe amino, un groupe hydrocarboné phosphoré ou un groupe hydrocarboné contenant du silicium ayant de 1 à 20 atomes de carbone.

Les composés (i) de formule (1) préférés sont généralement tels que

- Q représente un groupe alkylène contenant 1 ou 2 atomes de carbone pouvant être substitués par des groupes alkyle ou aryle contenant de 1 à 10 atomes de carbone, ou un groupe dialkylgermanium ou dialkylsilicium contenant de 1 à 6 atomes de carbone,
- a vaut 0 ou 1,
- b, c et d sont des nombres entiers satisfaisant aux conditions $0 \leq b \leq 5$, $0 \leq c \leq 5$ et $0 \leq d \leq 5$ quand a vaut 0 et $0 \leq b \leq 4$, $0 \leq c \leq 4$ et $0 \leq d \leq 4$ quand a vaut 1,
- $R^1$ et $R^2$ représentent des groupes alkyle, alkényle, aryle, alkylaryle, alkénylaryle ou arylalkyle contenant de 1 à 20 atomes de carbone, plusieurs groupes $R^1$ et/ou plusieurs groupes $R^2$ pouvant être reliés l'un à l'autre de manière à former un cycle contenant de 4 à 8 atomes de carbone,
- Me est le zirconium, l'hafnium ou le titane,
- X et Y représentent des atomes d'halogènes ou des groupes hydrocarbonés choisis parmi les alkyles, les aryles et les alkényles contenant de 1 à 10 atomes de carbone.

Particulièrement préférés sont les composés de formule (1) dans lesquels Q est un groupe de liaison choisi parmi le diméthyl- et le diphényl silyl, l'éthylène et les méthylènes et éthylènes substitués par des groupes alkyle ou aryle contenant de 1 à 8 atomes de carbone. Des composés de formule (1) qui conviennent particulièrement bien sont les composés dans lesquels les ligands $(C_5H_{5-a-b}R^1_b)$ et $(C_5H_{5-a-c}R^2_c)$ sont choisis parmi les cyclopentadiényles, indényles et fluorényles pouvant être substitués.

Les composés (i) de formule (2) préférés sont le plus souvent tels que

- a vaut 1,
- Q' représente un groupe de liaison alkylène contenant 1 ou 2 atomes de carbone pouvant être substitués par des groupes alkyle ou aryle contenant de 1 à 10 atomes de carbone, ou un groupe dialkylgermanium ou dialkylsilicium contenant de 1 à 6 atomes de carbone,
- $R^3$ représente un groupe alkyle, alkényle, aryle, alkylaryle, alkénylaryle ou arylalkyle contenant de 1 à 20 atomes de carbone, deux groupes $R^3$ pouvant être reliés l'un à l'autre de manière à former un cycle contenant de 4 à 8 atomes de carbone,
- Me est le zirconium, l'hafnium ou le titane,
- X et Y représentent des atomes d'halogènes ou des groupes hydrocarbonés choisis parmi les alkyles, les aryles et les alkényles.

Des composés (i) de formule (2) donnant de bons résultats sont les composés dans lesquels le ligand $(C_5H_{5-a-d}R^3_d)$ est un cyclopentadiényle, indényle ou fluorényle pouvant être substitué et Z est un groupement amino.

Les composés (i) préférés selon la présente invention sont les composés de formule (1).

L'activateur (ii) est choisi parmi les aluminoxanes et les agents ionisants. Par aluminoxanes, on entend les composés répondant aux formules $R^7 -(Al\ R^7 - O)_m - AlR^7_2$ et $(- Al\ R^7 - O -)_{m+2}$ dans lesquelles m est un nombre de 1 à 40 et $R^7$ est un groupe alkyle ou aryle contenant de 1 à 12 atomes de carbone. Les composés préférés sont choisis parmi les méthyl- , les éthyl- , les isobutylaluminoxanes et leurs mélanges, et plus particulièrement ceux dans lesquels m est un nombre de 2 à 20. Tout particulièrement préféré est le méthylaluminoxane dans lequel m est un nombre de 10 à 18.

Par agents ionisants, on entend désigner les composés comprenant une première partie qui présente les propriétés d'un acide de Lewis et qui est capable d'ioniser le composé d'un métal de transition (i) et une deuxième partie, qui est inerte vis-à-vis du composé d'un métal de transition (i) ionisé et qui est capable de le stabiliser. A titre de tels composés, on peut citer le tétrakis(pentafluorophényl)borate de triphénylcarbénium, le tétrakis(pentafluorophényl)borate de N,N-diméthylanilium, le tétrakis(pentafluorophényl)borate de tri(n-butyl)ammonium, le tri(pentafluorophényl)bore, le triphénylbore, le triméthylbore, le tri(triméthylsilyl)bore et les organoboroxines.

Les activateurs (ii) préférés selon la présente invention sont les aluminoxanes.

Le support polymérique poreux (iii) peut être constitué de tout polymère connu permettant de supporter le composé (i) et l'activateur (ii). A titre d'exemples non limitatifs de tels polymères, on peut citer les homo- et copolymères d'oléfines, de styrènes, de divinylbenzènes et de chlorure de vinyles. Le support (iii) est de préférence un support en polyoléfine. Par polyoléfines, on entend les polymères dérivés des alpha-oléfines définies ci-avant ou les copolymères de ces alpha-oléfines entre elles ou avec des dioléfines comprenant de 4 à 18 atomes de carbone. Les supports préférés selon la présente invention sont des homo- ou copolymères de l'éthylène et du propylène.

Les particules de polymères utilisables comme support polymérique poreux (iii) ont le plus souvent un diamètre moyen (Ds) de 5 à 500 $\mu$m. De préfé-

rence, le diamètre moyen est supérieur ou égal à 15 μm et plus particulièrement supérieur ou égal à 40 μm. Les particules dont le diamètre moyen est inférieur ou égal à 200 μm et plus particulièrement inférieur ou égal à 150 μm donnent de bons résultats.

Les particules de polymères utilisées comme support polymérique poreux (iii) présentent un volume poreux intraparticulaire généré par les pores de rayon de 1000 à 75000 Å ($10^{-10}$ m) d'au moins 0,2 cm$^3$/g. Dans le cadre de la présente invention, on entend désigner par volume poreux intraparticulaire, le volume poreux généré, dans la zone de 1000 à 75000 Å, par la porosité interne des particules en excluant le volume poreux généré par la porosité entre les particules (volume poreux interparticulaire). Le volume poreux intraparticulaire généré par les pores de rayon de 1000 à 75000 Å peut être déterminé en mesurant le volume poreux total du support dans la zone de 1000 à 75000 Å, puis en y enlevant le volume poreux interparticulaire. Le volume poreux interparticulaire dépend du diamètre moyen Ds des particules (F. Martens & H. Behrens, Plaste und Kautschuk, vol. 20(4), 1973, pages 278-279). Le volume poreux interparticulaire est défini dans le cadre de la présente invention comme étant le volume poreux généré dans la zone entre $\frac{Ds}{13}$ et 75000 Å

Le support (iii) présente de préférence un volume poreux intraparticulaire d'au moins 0,3 cm$^3$/g. Particulièrement préféré est un support (iii) ayant un volume intraparticulaire d'au moins 0,5 cm$^3$/g. Le volume poreux intraparticulaire ne dépasse en général pas 1,5 cm$^3$/g.

Les supports (iii) utilisés préférentiellement selon la présente invention sont ceux constitués de particules poreuses de polyoléfine(s), et plus particulièrement ceux ayant un diamètre moyen et un volume poreux tels que décrits ci-dessus. De tels supports sont notamment décrits dans le brevet US-A-5 556 893 (SOLVAY). Ces supports présentent l'avantage d'avoir la morphologie souhaitée sans devoir subir de traitement(s) ultérieur(s). Ils possèdent simultanément une porosité et une résistance mécanique à l'abrasion très élevées qui permet leur utilisation sans perdre leur morphologie. En plus, l'utilisation de supports compatibles avec le polymère conduit, in fine, à des polymères dont la teneur en cendres est particulièrement faible.

Le solide catalytique (a) utilisé dans le procédé selon l'invention peut être obtenu par différentes méthodes. En général, les particules de support (iii) sont mises en contact avec une solution contenant l'activateur (ii) pour obtenir une suspension qui est ensuite évaporée. La solution contenant l'activateur (ii) est généralement préparée à partir d'hydrocarbures aliphatiques ou cycloaliphatiques liquides pouvant être halogénés ou d'hydrocarbures aromatiques liquides. A titres d'exemples préférés de ces solvants, on peut citer le benzène, le toluène, le xylène, l'hexane, l'heptane, l'octane, la décaline, le dichlorométhane, le dichloroéthane, le chloropropane, et le chlorobenzène. Le composé de métal de transition (i) peut être introduit dans la suspension décrite ci-avant. Il peut également avoir été incorporé au support (iii) avant sa mise en oeuvre. Enfin, il peut être mis en contact avec les particules de support comprenant l'activateur (ii). La méthode de préparation du solide catalytique (a) préférée comprend la préparation d'une solution contenant le composé de métal de transition (i) et l'activateur (ii) à laquelle on ajoute le support (iii) de manière à former une suspension qui est ensuite évaporée.

Le solide catalytique (a) mis en oeuvre dans le procédé selon la présente invention contient en général de 0,0001 à 0,5 g de composé de métal de transition (i) par gramme de support (iii). De préférence, la concentration en composé (i) est d'au moins 0,0005 g et plus particulièrement d'au moins 0,001 g par gramme de support (iii). Des quantités de composé (i) inférieures ou égales à 0,3 et préférentiellement inférieures ou égales à 0,1 g par gramme de support donnent de bons résultats.

La quantité d'activateur (ii) dans le solide catalytique dépend du type d'activateur utilisé. Lorsque l'activateur (ii) est un aluminoxane, la quantité de l'aluminoxane est le plus souvent telle que le rapport atomique entre l'aluminium de l'aluminoxane et le métal de transition du composé (i) dans le solide catalytique est de 20 à 5000. De préférence ce rapport est d'au moins 50, plus particulièrement d'au moins 100. On obtient de bons résultats lorsque ce rapport est d'au moins 200. Le plus souvent l'aluminoxane est mis en oeuvre dans des quantités telles que le rapport atomique aluminium / métal de transition est d'au plus 2000 et plus particulièrement d'au plus 1500. Des rapports d'au plus 1000 donnent de bons résultats. Lorsque l'activateur (ii) est un agent ionisant la quantité d'agent ionisant est le plus souvent telle que le rapport molaire entre l'agent ionisant et le composé de métal de transition (i) est de 0,05 à 50. De préférence ce rapport est d'au moins 0,1 et plus particulièrement d'au plus 20.

Selon une variante avantageuse du procédé selon l'invention, on utilise un solide catalytique (a) qui a été soumis à une polymérisation préliminaire au cours de laquelle il est mis en contact avec une alpha-oléfine, dans des conditions polymérisantes de manière à former de 0,01 à 50 g de polyoléfine par g de solide catalytique contenant les composés (i), (ii) et (iii). L'alpha-oléfine mise en oeuvre au cours de l'étape de polymérisation préliminaire est avantageusement choisie parmi les alpha-oléfines contenant de 2 à 4 atomes de carbone. L'éthylène et le propylène conviennent particulièrement bien. La quantité de polymère formée lors de l'étape de polymérisation préliminaire est le plus souvent d'au moins 0,05 et plus particulièrement d'au moins 0,1 g de polyoléfine par g de solide catalytique contenant les composés (i), (ii) et (iii). On obtient de bons résultats lorsque celle quantité est inférieure ou égale à 30 g, de préférence d'au plus 10 g, par g de solide catalytique contenant les composés (i), (ii) et (iii). Selon une forme d'exécution particulièrement avantageuse de l'invention, cette polymérisation préliminaire est effectuée dans un diluant dont la viscosité cinématique, mesurée à 20 °C, est de 3 à 3000 mm$^2$/s (de préférence de 10 à 500 mm$^2$/s), tel qu'une huile minérale.

Le solide catalytique (a) mis en oeuvre dans le procédé selon l'invention se présente en général sous la forme d'une poudre sèche de bonne coulabilité. Les particules de solide catalytique présentent en général la même morphologie que les supports qui lui ont donné naissance. Le solide catalytique (a) peut être utilisé tel quel pour la polymérisation des alpha-oléfines. Le solide catalytique (a) peut également être mis en oeuvre dans le procédé selon l'invention sous forme d'une suspension dans un diluant adapté à sa mise en oeuvre.

Le composé organoaluminium (b) mis en oeuvre dans le procédé selon la présente invention est choisi parmi les composés répondant à la formule générale $R_{3-n}Al(Y')_n$ dans laquelle $0,9 < n \leq 3$, Y' représente un groupement choisi parmi -OR', -SR' et -NR'R''; R et R' représentent, indépendamment, un groupe alkyle comprenant de 1 à 20 atomes de carbone, un groupe aryle, alkylaryle ou arylalkyle comprenant de 6 à 30 atomes de carbone, et R'' représente un atome d'hydrogène, un groupe alkyle comprenant de 1 à 20 atomes de carbone, un groupe aryle, alkylaryle ou arylalkyle comprenant de 6 à 30 atomes de carbone.

Les composés organoaluminium (b) préférés sont ceux dans lesquels R et R' représentent, indépendamment, un groupe alkyle comprenant de 1 à 6 atomes de carbone, et R'' est un atome d'hydrogène ou un groupe alkyle comprenant de 1 à 6 atomes de carbone.

De manière préférée, on met en oeuvre un composé organoaluminium (b) choisi parmi les composés répondant à la formule générale $R_{3-n}Al(OR')_n$ dans laquelle R et R' ont les significations données ci-avant. Particulièrement préférés sont les composés répondant à la formule générale $R_{3-n}Al(OR')_n$ dans lesquels R et R' sont des groupes alkyle comprenant de 1 à 6 atomes de carbone, et plus spécialement ceux dans lesquels R et R' sont des groupes alkyle comprenant de 2 à 4 atomes de carbone.

Les composés organoaluminium (b) préférés sont ceux dans lesquels $1,01 < n < 2,9$, et plus particulièrement ceux dans lesquels $1,05 < n < 2,5$.

Les composés organoaluminiuin (b) particulièrement préférés dans le procédé selon l'invention sont les composés répondant à la formule générale $R_{3-n}Al(OR')_n$ dans laquelle $1,05 < n < 2,5$ et R et R', indépendamment, sont choisis parmi les groupes éthyle, isopropyle, isobutyle, n-butyle et t-butyle.

Les composés organoaluminium (b) mis en oeuvre dans le procédé selon l'invention peuvent être obtenus par différentes méthodes connues. Ils peuvent par exemple être obtenus en faisant réagir, en quantités appropriées, un dérivé organoaluminium de formule $R_3Al$ avec un alcool de formule H-O-R', une amine de formule H-NR'R'' et/ou un thioalcool de formule H-S-R'. Les composés organoaluminium (b) mis en oeuvre dans le procédé selon l'invention dans lesquels $n > 1$ sont avantageusement obtenus en faisant réagir un composé de formule $R_2Al(Y')$ avec un alcool de formule H-O-R', une amine de formule H-NR'R'' et/ou un thioalcool de formule H-S-R; dans ces formules, R' et R'' ont les significations données ci-avant en rapport avec le composé organoaluminium (b). Dans ce cas, la quantité d'alcool, d'amine ou de thioalcool mise en oeuvre est en général inférieure à 2,5 moles par mole de composé de formule $R_2Al(Y')$. De manière préférée, la quantité d'alcool, de l'amine ou du thioalcool mise en oeuvre est inférieure ou égale à 2 mole par mole de composé de formule $R_2Al(Y')$. Particulièrement préférée est une quantité qui ne dépasse pas 1,5 mole par mole de composé de formule $R_2Al(Y')$. La quantité d'alcool, d'amine ou de thioalcool mise en oeuvre est de préférence au moins égale à 0,05 mole par mole de composé de formule $R_2Al(Y')$.

Le composé organoaluminium (b) répondant à la formule générale $R_{3-n}Al(Y')_n$ dans laquelle $0,9 < n \leq 3$ peut également être obtenu en mélangeant plusieurs composés organoaluminium, ce mélange ayant une composition telle qu'elle répond à la formule générale $R_{3-n}Al(Y')_n$ dans laquelle $0,9 < n \leq 3$. Par exemple, le mélange d'un équivalent d'un composé organoaluminium $R_3Al$ avec un équivalent d'un composé $R_{3-x}Al(Y')_x$ dans lequel $x > 1,8$ produit un composé organoaluminium répondant à la formule générale $R_{3-n}Al(Y')_n$ dans laquelle $0,9 < n \leq 3$.

Le composé organoaluminium (b) répondant à la formule générale $R_{3-n}Al(Y')_n$ dans laquelle $0,9 < n \leq 3$ peut se présenter sous différentes formes, notamment, sous forme monomérique, dimérique, trimérique, tétramérique ou même oligomérique.

La quantité de composé organoaluminium (b) répondant à la formule générale $R_{3-n}Al(Y')_n$ dans laquelle $0,9 < n \leq 3$ mise en oeuvre dans le procédé selon l'invention est en général telle que le rapport atomique entre l'aluminium provenant du composé organoaluminium (b) et le métal de transition du composé (i) est de 10 à 50000. De préférence ce rapport est d'au moins 50, plus particulièrement d'au moins 100. On obtient de bons résultats lorsque ce rapport est d'au moins 200. Le plus souvent le composé organoaluminium (b) est mis en oeuvre dans des quantités telles que le rapport atomique aluminium provenant du composé organoaluminium/métal de transition du composé (i) est d'au plus 20000 et plus particulièrement d'au plus 17000. Des rapports d'au plus 15000 donnent de bons résultats.

Le procédé de polymérisation selon l'invention peut être réalisé en continu ou en discontinu, selon n'importe quel procédé connu, en solution ou en suspension dans un diluant hydrocarboné, en suspension dans le monomère, ou un des monomères, maintenu à l'état liquide ou encore en phase gazeuse.

La température à laquelle est effectué le procédé de polymérisation selon l'invention est généralement de -20 °C à +150 °C, le plus souvent de 20 à 130 °C. La température de polymérisation est de préférence d'au moins 60 °C. De manière préférée, elle ne dépasse pas 115 °C.

La pression totale à laquelle est effectué le procédé selon l'invention est en général choisie entre la pression atmosphérique et $100 \times 10^5$ Pa, plus particulièrement entre $10 \times 10^5$ et $55 \times 10^5$ Pa.

La masse moléculaire des polymères fabriqués selon le procédé de l'invention peut être réglée par addition d'un ou plusieurs agents de réglage de la masse moléculaire des polyoléfines tels que plus particulièrement l'hydrogène.

Selon une variante avantageuse du procédé selon l'invention, le procédé comprend une première étape de polymérisation, distincte de l'étape de polymérisation préliminaire (décrite ci-avant en rapport avec le solide catalytique) et appelée étape de prépolymérisation, au cours de laquelle on forme de 1 à 1000 g de polymère par g de solide catalytique contenant les composés (i), (ii) et (iii). La quantité de prépolymère formée dans cette étape de prépolymérisation est avantageusement d'au moins 3 g, plus particulièrement d'au moins 5 g, par g de solide catalytique contenant les composés (i), (ii) et (iii). On obtient de bons résultats lorsque la quantité de prépolymère est d'au plus 700 g, plus particulièrement d'au plus 400 g, par g de solide catalytique contenant les composés (i), (ii) et (iii). En général, l'étape de prépolymérisation est effectuée à une température de 0 à 60 °C, de préférence à une température de 20 à 50 °C.

Lorsque le procédé de polymérisation est appliqué à la polymérisation du propylène, cette étape de prépolymérisation est avantageusement effectuée en suspension dans le monomère liquide. Lorsque le procédé est appliqué à la polymérisation de l'éthylène, la prépolymérisation est avantageusement effectuée dans un diluant choisi parmi les hydrocarbures aliphatiques contenant de 3 à 10 atomes de carbone.

Un avantage des procédés comprenant une telle étape de prépolymérisation est que la morphologie du polymère est conservée même lorsque l'étape de polymérisation ultérieure est effectuée à haute température.

Le procédé de polymérisation selon l'invention est avantageusement appliqué à la fabrication de polymères d'éthylène, et plus particulièrement, à la fabrication de homo- et de copolymères de l'éthylène comprenant au moins 90 moles % d'unités dérivées de l'éthylène. Les copolymères préférés sont ceux de l'éthylène et d'une autre alpha-oléfine comprenant de 3 à 8 atomes de carbone. Particulièrement préférés sont les copolymères de l'éthylène et du 1-butène et/ou du 1-hexène. Dans ce cas, le procédé de polymérisation est de préférence réalisé en suspension dans un diluant hydrocarboné. Le diluant hydrocarboné est généralement choisi parmi les hydrocarbures aliphatiques contenant de 3 à 10 atomes de carbone. De préférence, le diluant est choisi parmi le propane, l'isobutane, l'hexane ou leurs mélanges.

Le procédé selon l'invention est également avantageusement appliqué à la fabrication de copolymères d'éthylène et d'une autre alpha-oléfine comprenant de 3 à 8 atomes de carbone présentant une distribution bimodale de poids moléculaire. Selon une première variante du procédé selon l'invention, ces copolymères sont fabriqués dans un seul réacteur de polymérisation au moyen d'un système catalytique comprenant au moins deux composés de métal de transition (i) différents, donnant chacun un polymère de masse moléculaire distincte de l'autre. Selon une deuxième variante du procédé selon l'invention, ces polymères sont fabriqués en réalisant le procédé selon l'invention dans au moins deux réacteurs de polymérisation connectés en série, les conditions de polymérisation étant différentes dans les deux réacteurs. Dans cette deuxième variante, on réalise de préférence le procédé de polymérisation de façon à obtenir dans un des réacteurs un copolymère de l'éthylène ayant une masse moléculaire élevée et dans l'autre réacteur un homopolymère de l'éthylène ayant une masse moléculaire plus faible que celle du copolymère.

Le procédé selon l'invention permet d'obtenir des polymères d'alpha-oléfines ayant un poids spécifique apparent (PSA) élevé, en particulier nettement plus élevé que les polymères obtenus dans des procédés mettant en oeuvre un système catalytique ne comprenant pas un composé d'organoaluminium (b) selon l'invention. En effet, on a observé de manière surprenante que l'utilisation d'un composé organoaluminium (b) répondant à la formule $R_{3-n}Al(Y')_n$ permettait d'obtenir des polymères ayant des PSA supérieurs à ceux obtenus avec le même solide catalytique mais en l'absence d'un composé organoaluminique ou en présence d'un alkylaluminium classique tel que du triméthylaluminium, du triéthylaluminium ou du triisobutylaluminium. L'obtention de polymères ayant des PSA élevés a pour avantage d'augmenter les capacités de production des installations de polymérisation, de stockage et de transport.

En outre, de manière surprenante, on a également mis en évidence que le procédé selon l'invention permet d'obtenir une activité catalytique très importante, nettement supérieure à celle obtenue lorsqu'un support non poreux ou un support inorganique tel que la silice est utilisé en tant que support (iii) et/ou lorsque le système catalytique est utilisé sans composé organoaluminique (b) ou en présence d'un alkylaluminium classique tel que du triméthylaluminium, du triéthylaluminium ou du triisobutylaluminium.

Un autre avantage du procédé selon l'invention est qu'il n'y a quasi pas de formation de croûtage dans le réacteur de polymérisation.

Par ailleurs, l'utilisation du procédé selon l'invention permet l'obtention de polymères ayant une très belle morphologie et dont le taux de fines particules (particules ayant un diamètre inférieur ou égal à 125 μm) est très faible, le plus souvent inférieur à 0,5 % en poids et plus particulièrement inférieur à 0,1 % en poids par rapport au poids total de polymère. Des taux de fines aussi faibles sont obtenus même pour des activités catalytiques élevées (moins de 0,5 ppm de métal de transition dans le polymère final).

Les exemples suivants servent à illustrer l'invention. La signification des symboles utilisés dans ces exemples, les unités exprimant les grandeurs mentionnées et les méthodes de mesure de ces grandeurs sont explicitées ci-dessous.

Ds = diamètre moyen des particules de support en μm. Le diamètre moyen des particules de support est le diamètre médian des particules mesuré, à partir d'une suspension dans le 2-propanol, selon la norme NFX11-666 (1984) sur un appareil MALVERN® modèle Mastersizer MS1000.

VPi = volume poreux intraparticulaire du support généré par les pores de rayon de 1000 à 75000 Å ($10^{-10}$ m) exprimé en $cm^3$/g. La porosité des supports (iii) est déterminée par la méthode de pénétration de mercure au moyen de porosimètres commercialisés par CARLO ERBA CO. dans la zone des rayons de pores 75 à 75000 Å ($10^{-10}$ m). On obtient ainsi la courbe du volume poreux total exprimée en $cm^3$/g en fonction du diamètre des pores à partir de laquelle on détermine le volume poreux total généré par les pores de rayons de 1000 à 75000 Å ($10^{-10}$ m). Le volume poreux intraparticulaire est obtenu en enlevant de ce volume poreux total, le volume poreux interparticulaire (qui est le volume poreux généré par les pores de rayons entre $\frac{Ds}{13}$ (valeur exprimée en Å) et 75000 Å).

α = activité catalytique exprimée en kg de polymère obtenu par millimole de métal de transition provenant du composé (i). Cette activité catalytique est appréciée indirectement à partir de la détermination de la teneur résiduelle en métal de transition dans le polyéthylène par Inductively Coupled Plasma Mass Spectroscopy (ICP-MS) sur un appareil MICROMASS® Plasma Trace 1.

PSA = poids spécifique apparent du polymère obtenu exprimé en kg/$m^3$. Le poids spécifique apparent (PSA) du polymère d'alpha-oléfine est mesuré par écoulement libre selon le mode opératoire suivant : dans un récipient cylindrique dc 50 $cm^3$ de capacité, on verse le polymère issu du procédé de polymérisation en évitant de le tasser, depuis une trémie dont le bord inférieur est disposé 20 mm au-dessus du bord supérieur du récipient. On pèse ensuite le récipient rempli de la poudre, on déduit la tare du poids relevé et on multiplie le résultat obtenu, exprimé en kg, par 20 000, de façon à exprimer le PSA en kg/$m^3$.

Exemple 1

A. Préparation du solide catalytique

Dans un réacteur de 0,8 l, préalablement conditionné et muni d'un agitateur, on introduit successivement 0,2 g de bis(n-butylpentadiényl) dichlorure de zirconium [composé (i)] et 50 ml de toluène. Ensuite on ajoute, goutte à goutte et sous agitation, 200 ml d'une solution de méthylaluminoxane (composé (ii)) à 10 % ai poids dans du toluène et 40 g d'un support de polypropylène (composé (iii)) préparé selon la méthode décrite à l'exemple 1 du brevet US-A-5556893 et caractérisé par un Ds de 64 μm et un VPi de 0,795 $cm^3$/g. Le volume poreux total mesuré entre 1000 et 75000 Å était de 0,84 $cm^3$/g.

Le volume poreux interparticulaire mesuré entre 49230 Å (= $\frac{Ds}{13}$ ) et 75000 Å était de 0,045 $cm^3$/g.

La suspension ainsi obtenue est ensuite portée à 65 °C et évaporée sous agitation et sous un courant d'azote jusqu'à obtention d'une poudre sèche de bonne coulabilité. Cette étape d'évaporation dure environ 10 heures et est considérée comme complète lorsque la concentration en solvant dans l'azote à la sortie du réacteur est inférieure à 50 ppm. A température ambiante on prélève 2,2 g de poudre à des fins d'analyse. La teneur en zirconium de cette poudre mesurée par fluorescence X est de 0,84 g/kg. On n'observe pas d'augmentation significative du diamètre moyen de cette poudre.

Le reste de la poudre est alors mis en suspension sous balayage d'azote dans 518,8 g d'huile minérale ONDINA® 32 commercialisée par SHELL et ayant une viscosité cinématique de 90 cSt ($mm^2$/s), de manière à former une suspension à 9 % en poids.

Le réacteur étant maintenu à 25 °C, sous atmosphère inerte, on y introduit alors de l'éthylène sous une pression partielle de 1,5 kg/$cm^2$. Cette introduction est maintenue pendant environ 35 minutes de manière à incorporer 7,44 g d'éthylène et à obtenir un solide catalytique contenant 0,2 g de polyéthylène par gramme de solide catalytique comprenant les composés (i), (ii) et (iii).

B. Polymérisation de l'éthylène

Dans un autoclave de 3 litres, préalablement séché, et muni d'un agitateur, on introduit sous balayage d'azote sec 1 mmole de diéthylaluminium éthoxyde $(C_2H_5)_2Al(OC_2H_5)$ (commercialisé par la

société WITCO sous le nom de DEALOX et mis en oeuvre sous la forme d'une solution à 40 g/l dans l'hexane) et 900 ml d'isobutane.

La température est portée à 30 °C et de l'éthylène est introduit de façon à obtenir une pression partielle d'éthylène de $10x10^5$ Pa.

Après avoir introduit environ 159 mg du solide catalytique décrit ci-dessus (cette quantité correspond à $1,3x10^{-6}$ mole de Zr) à l'aide de 100 ml d'isobutane, on maintient le réacteur à 30 °C durant 20 minutes (prépolymérisation).

Ensuite la température du réacteur est augmentée à 75 °C. Durant toute la polymérisation, la pression partielle de l'éthylène est maintenue à $13,8x10^5$ Pa.

Après 1 heure de polymérisation, l'excédent de l'éthylène est dégazé et on récupère 162 g de polyéthylène sous forme de grains de morphologie régulière dont le PSA est de 346 $kg/m^3$ et ne contenant pas de particules ayant un diamètre inférieur ou égal à 200μm. Les parois du réacteur ne présentent pas de traces de croûtage.

L'activité catalytique $\alpha$ est de 315 kg PE/mmole Zr.

## Exemple 2R (non conforme à l'invention)

L'exemple 1 est répété sauf que le composé organoaluminium $(C_2H_5)_2Al(OC_2H_5)$ est remplacé par du triéthylaluminium. Après 1 heure de polymérisation, on récupère 40 g polyéthylène dont le PSA est de 250 $kg/m^3$. Le polyéthylène comprend beaucoup de fines particules ayant un diamètre inférieur à 125 μm.
$\alpha$ = 65 kg PE/mmole Zr.

## Exemple 3

### A. Préparation du solide catalytique

Dans un réacteur de 0,8 l, préalablement conditionné et muni d'un agitateur, on introduit successivement 0,39 g de diméthylsilyl-1,1'-bis(2-méthyl-4,5-benzoindényle) dichlorure de zirconium [composé (i)] et 50 ml de toluène. Ensuite on ajoute, goutte à goutte et sous agitation, 300 ml d'une solution de méthylaluminoxane (composé (ii)) à 10 % en poids dans du toluène et 60 g d'un support de polypropylène (composé (iii)) tel que décrit à l'exemple 1.

La suspension ainsi obtenue est ensuite portée à 65 °C et évaporée sous agitation et sous un courant d'azote jusqu'à obtention d'une poudre sèche de bonne coulabilité. Cette étape d'évaporation dure environ 10 heures et est considérée comme complète lorsque la concentration en solvant dans l'azote à la sortie du réacteur est inférieure à 50 ppm. A température ambiante, on prélève 3,7 g de poudre à des fins d'analyse. La teneur en zirconium de cette poudre mesurée par fluorescence X est de 0,86 g/kg.

Le reste de la poudre est alors mis en suspension sous balayage d'azote dans 540 g d'huile minérale ONDINA® 32 commercialisée par SHELL et ayant une viscosité cinématique de 90 cSt ($mm^2$/s), de manière à former une suspension à 13,3 % en poids.

Le réacteur étant maintenu à 25 °C, sous atmosphère inerte, on y introduit alors du propylène sous une pression partielle de 1,5 $kg/cm^2$. Cette introduction est maintenue pendant environ 35 minutes de manière à incorporer 33,2 ml de propylène et à obtenir un solide catalytique contenant 0,2 g de polypropylène par gramme de solide catalytique comprenant les composés (i), (ii) et (iii).

### B. Polymérisation de l'éthylène

Dans un autoclave de 3 litres, préalablement séché, et muni d'un agitateur, on introduit sous balayage d'azote sec 0,3 mmole de diéthylaluminium éthoxyde $(C_2H_5)_2Al(OC_2H_5)$ (commercialisé par la société WITCO sous le nom de DEALOX et mis en oeuvre sous la forme d'une solution à 40 g/l dans l'hexane) et 900 ml d'isobutane.

La température est portée à 30 °C et de l'éthylène est introduit de façon à obtenir une pression partielle d'éthylène de $10x10^5$ Pa.

Après avoir introduit environ 114 mg du solide catalytique décrit ci-dessus (cette quantité correspond à $0,5x10^{-3}$ mmole de Zr) à l'aide de 100 ml d'isobutane, on maintient le réacteur à 30°C durant 20 minutes (prépolymérisation).

Ensuite la température du réacteur est augmentée à 75 °C. Durant toute la polymérisation, la pression partielle on éthylène est maintenue à $13,8x10^5$ Pa.

Après 1 heure, l'excédent de l'éthylène est dégazé et on récupère 96 g polyéthylène sous forme de grains de morphologie régulière dont le PSA est de 384 $kg/m^3$ et ne contenant pas de particules ayant un diamètre inférieur ou égal à 200μm.

Les parois du réacteur ne présentent pas de traces de croûtage; toutefois un léger film y est présent.
$\alpha$ = 143 kg PE/mmole Zr.

## Exemple 4

L'exemple 3 est répété sauf que le composé organoaluminium de formule $(C_2H_5)_2Al(OC_2H_5)$ est remplacé par un composé organoaluminium de formule $(C_2H_5)_{1,95}Al(OC_2H_5)_{1,05}$. Ce composé est obtenu en faisant réagir pendant environ 1 heure et à une température de 20 °C, 25 ml d'une solution à 80g/l du composé organoaluminium de formule $(C_2H_5)_2Al(OC_2H_5)$ dans de l'hexane avec 0,05 équivalent d'éthanol en solution dans 25 ml d'hexane.

Après 1 heure de polymérisation, on récupère 292 g polyéthylène sous forme de grains de morphologie régulière dont le PSA est de 383 $kg/m^3$ et ne contenant pas de particules ayant un diamètre inférieur ou égal à 200μm.

Les parois du réacteur ne présentent pas de traces de croûtage, ni de film.

$\alpha$ = 380 kg PE/mmole Zr.

Exemple 5

L'exemple 3 est répété sauf que le composé organoaluminium de formule $(C_2H_5)_2Al(OC_2H_5)$ est remplacé par un composé organoaluminium de formule $(C_2H_5)_{1,5}Al(OC_2H_5)_{1,5}$. Ce composé est obtenu en faisant réagir pendant 2 heures et à une température de 20 °C, 15 ml d'une solution à 80 g/l du composé organoaluminium de formule $(C_2H_5)_2Al(OC_2H_5)$ dans l'hexane avec 0,5 équivalent d'éthanol en solution dans 14,5 ml d'hexane.

Après 1 heure de polymérisation, on récupère 486 g polyéthylène sous forme de grains de morphologie régulière dont le PSA est de 339 kg/m³ et ne contenant pas de particules ayant un diamètre inférieur ou égal à 200µm. Les parois du réacteur ne présentent pas de traces de croûtage, ni de film.

$\alpha$ = 760 kg PE/mmole Zr.

Exemple 6

L'exemple 3 est répété sauf que le composé organoaluminium de formule $(C_2H_5)_2Al(OC_2H_5)$ est remplacé par un composé organoaluminium de formule $(C_2H_5)_1Al(OC_2H_5)_2$. Ce composé est obtenu en faisant réagir pendant environ 2 heures et à une température de 20 °C, 25 ml d'une solution à 80 g/l du composé organoaluminium de formule $(C_2H_5)_2Al(OC_2H_5)$ dans l'hexane avec 1 équivalent d'éthanol en solution dans 23,9 ml d'hexane.

Après 1 heure de polymérisation, on récupère 528 g polyéthylène sous forme de grains de morphologie régulière dont le PSA est de 327 kg/m³ et ne contenant pas de particules ayant un diamètre inférieur ou égal à 200µm.

Les parois du réacteur ne présentent pas de traces de croûtage, ni de film.

$\alpha$ = 702 kg PE/mmole Zr.

Exemple 7

L'exemple 3 est répété sauf que le composé organoaluminium de formule $(C_2H_5)_2Al(OC_2H_5)$ est remplacé par un composé organoaluminium de formule $(C_2H_5)_{0,05}Al(OC_2H_5)_{2,95}$. Ce composé est obtenu en faisant réagir pendant environ 2 heures et à une température de 20 °C, 25 ml d'une solution à 80 g/l du composé organoaluminium de formule $(C_2H_5)_2Al(OC_2H_5)$ dans l'hexane avec 1,95 équivalent d'éthanol en solution dans 22,8 ml d'hexane.

Après 1 heure de polymérisation, on récupère 118 g polyéthylène sous forme de grains de morphologie régulière dont le PSA est de 318 kg/m³ et ne contenant pas de particules ayant un diamètre inférieur ou égal à 200µm. Les parois du réacteur ne présentent pas de traces de croûtage, ni de film.

$\alpha$ = 182 kg PE/mmole Zr.

Exemple 8R (non conforme à l'invention)

L'exemple 3 est répété sauf que le composé organoaluminium de formule $(C_2H_5)_2Al(OC_2H_5)$ est omis.

Après 1 heure de polymérisation, on récupère 33 g polyéthylène dont le PSA est de 168 kg/m³. Les parois du réacteur ne présentent pas de traces de croûtage; toutefois un film y est présent.

$\alpha$ = 57 kg PE/mmole Zr.

Exemple 9R (non conforme à l'invention)

L'exemple 3 est répété sauf que les 0,3 mmole du compose organoaluminium de formule $(C_2H_5)_2Al(OC_2H_5)$ sont remplacés par 1 mmole de triéthylaluminium.

Après 1 heure de polymérisation, on récupère 78 g polyéthylène dont le PSA est de 128 kg/m³. Les parois du réacteur présentent du croûtage.

$\alpha$ = 101 kg PE/mmole Zr.

Exemple 10R (non conforme à l'invention)

L'exemple 3 est répété sauf que les 0,3 mmole du composé organoaluminium de formule $(C_2H_5)_2Al(OC_2H_5)$ sont remplacés par 1 mmole de triméthylaluminium.

Après 1 heure de polymérisation, on récupère 58 g polyéthylène dont le PSA est de 211 kg/m³. Les parois du réacteur présentent du croûtage.

$\alpha$ = 76 kg PE/mmole Zr.

**Revendications**

1. Procédé de polymérisation d'alpha-oléfines dans lequel on met en contact, dans des conditions polymérisantes, au moins une alpha-oléfine avec un système catalytique comprenant

    (a) un solide catalytique comprenant (i) un composé d'un métal de transition des groupes 4 à 6 du Tableau Périodique contenant au moins un ligand cyclopentadiénique pouvant être substitué, (ii) un activateur choisi parmi les aluminoxanes et les agents ionisants et (iii) un support polymérique poreux ayant un volume poreux intraparticulaire généré par les pores de rayon de 1000 à 75000 Å d'au moins 0,2 cm³/g, et,

    (b) au moins un composé organoaluminium répondant à la formule générale $R_{3-n}Al(Y')_n$ dans laquelle $0,9 < n \leq 3$; Y' représente un groupement choisi parmi -OR', -SR' et -NR'R'';

R et R' représentent, indépendamment, un groupe alkyle comprenant de 1 à 20 atomes de carbone, un groupe aryle, alkylaryle ou arylalkyle comprenant de 6 à 30 atomes de carbone, et R" représente un atome d'hydrogène, un groupe alkyle comprenant de 1 à 20 atomes de carbone, un groupe aryle, alkylaryle ou arylalkyle comprenant de 6 à 30 atomes de carbone.

2. Procédé selon la revendication 1, dans lequel le composé de métal de transition (i) est choisi parmi les composés de formules

$$Q_a (C_5H_{5-a-b}R^1_b)( C_5H_{5-a-c}R^2_c) \, Me \, X \, Y \qquad (1)$$

et

$$Q'_a (C_5H_{5-a-d}R^3_d) \, Z \, Me \, X \, Y \qquad (2)$$

dans lesquelles

- Q représente un groupe de liaison bivalent entre les deux ligands cyclopentadiéniques($C_5H_{5-a-b}R^1_b$) et ( $C_5H_{5-a-c}R^2_c$),
- Q' représente un groupe de liaison bivalent entre le ligand cyclopentadiénique ($C_5H_{5-a-d}R^3_d$) et le groupe Z,
- a vaut 0 ou 1,
- b, c et d sont des nombres entiers satisfaisant aux conditions 0≤b≤5, 0≤c≤5 et 0≤d≤5 quand a vaut 0 et 0≤b≤4, 0≤c≤4 et 0≤d≤4 quand a vaut 1,
- $R^1$, $R^2$ et $R^3$ représentent chacun des groupes hydrocarbonés contenant de 1 à 20 atomes de carbone pouvant être reliés au cycle cyclopentadiénique sous la forme d'un groupe monovalent ou pouvant être reliés l'un à l'autre de manière à former un cycle adjacent au cycle cyclopentadiénique, des atomes d'halogène, des poupes alcoxy ayant de 1 à 12 atomes de carbone, des groupes hydrocarbonés contenant du silicium de formule -Si($R^4$)($R^5$)($R^6$), des groupes hydrocarbonés phosphorés de formule -P($R^4$)($R^5$), des poupes hydrocarbonés azotés de formule -N($R^4$)($R^5$) ou des groupes hydrocarbonés contenant du bore de formule -B($R^4$)($R^5$) dans lesquelles $R^4$, $R^5$ et $R^6$ représentent des groupes hydrocarbonés contenant de 1 à 24 atomes de carbone, pour autant que quand b, c ou d vaut 2 ou plus et/ou qu'il existe une pluralité de groupes $R^1$, $R^2$ ou $R^3$, ces derniers peuvent être identiques ou différents,
- Me représente un métal de transition des groupes 4 à 6 du Tableau Périodique,
- Z représente un atome oxygène, un atome de soufre, un groupe alcoxy ou thioalcoxy ayant de 1 à 20 atomes de carbone, un poupe hydrocarboné azoté ou phosphoré ayant de 1 à 40 atomes de carbone ou un groupe hydrocarboné contenant de 1 à 20 atomes de carbone, pour autant qu'une liaison du groupe Z soit liée au groupe Q' quand a vaut 1, et

- X et Y, identiques ou différents, représentent chacun un atome d'hydrogène, un atome d'halogène, un groupe hydrocarboné, un groupe alcoxy, un groupe amino, un groupe hydrocarboné phosphoré ou un groupe hydrocarboné contenant du silicium ayant de 1 à 20 atomes de carbone.

3. Procédé selon la revendication 2 ou 3, dans lequel l'activateur (ii) est un aluminoxane choisi parmi les méthyl- , les éthyl- , les isobutylaluminoxanes et leurs mélanges.

4. Procédé selon l'une quelconque des revendications 1 à 3, dans lequel le support présente un volume poreux intraparticulaire généré par les rayons de 1000 à 75000 Å d'au moins 0,3 cm$^3$/g.

5. Procédé selon l'une quelconque des revendications 1 à 4, dans lequel le support est constitué de particules poreuses de polyoléfine(s).

6. Procédé selon l'une quelconque des revendications 1 à 5, dans lequel le solide catalytique a été soumis à une polymérisation préliminaire.

7. Procédé selon l'une quelconque des revendications 1 à 6, dans lequel le composé organoaluminium est choisi parmi les composés répondant à la formule générale $R_{3-n}Al(OR')_n$ dans laquelle R et R' représentent, indépendamment, un groupe alkyle comprenant de 1 à 20 atomes de carbone, un groupe aryle, alkylaryle ou arylalkyle comprenant de 6 à 30 atomes de carbone.

8. Procédé selon l'une quelconque des revendications 1 à 7, dans lequel le composé organoaluminium est choisi parmi ceux dans lesquels 1,05 < n < 2,5.

9. Procédé selon la revendication 7 ou 8, dans lequel le composé organoaluminium répond à la formule générale $R_{3-n}Al(OR')_n$ dans laquelle 1,05 < n < 2,5 et R et R', indépendamment, sont choisis parmi les groupes éthyle, isopropyle, isobutyle, n-butyle et t-butyle.

10. Procédé selon l'une quelconque des revendications 1 à 9, appliqué à la fabrication de homo- ou de copolymères de l'éthylène comprenant au moins 90 moles % d'unités dérivées de l'éthylène.

Office européen
des brevets

**RAPPORT DE RECHERCHE EUROPEENNE**

Numéro de la demande

EP 00 20 0846

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 314 797 A (MITSUI PETROCHEMICAL IND) 10 mai 1989 (1989-05-10) <br> * revendications 1,2,5 * <br> * page 16, ligne 17 - page 17, ligne 8 * <br> * exemple 8 * | 1-10 | C08F4/622 <br> C08F10/00 |
| Y | US 5 756 613 A (FRANCOIS PHILIPPE ET AL) 26 mai 1998 (1998-05-26) <br> * abrégé * <br> * colonne 6, ligne 66 - colonne 8, ligne 27 * <br> * colonne 13, ligne 21 - ligne 36 * <br> * tableau I * <br> * exemples 12,13 * | 1-10 | |
| A | PATENT ABSTRACTS OF JAPAN vol. 1998, no. 06, 30 avril 1998 (1998-04-30) <br> & JP 10 036423 A (IDEMITSU KOSAN CO LTD), 10 février 1998 (1998-02-10) <br> * abrégé * | 8 | |
| | | | **DOMAINES TECHNIQUES RECHERCHES** (Int.Cl.7) |
| A | WO 95 10546 A (DSM NV ;DOREMAELE GERARDUS HENRICUS JO (NL); BEEK JOHANNES ANTONIU) 20 avril 1995 (1995-04-20) <br> * revendication 1 * <br> * page 5, ligne 30 - page 6, ligne 7 * <br> * page 7, ligne 14 - ligne 18 * <br> * exemple I * | 1 | C08F |
| A | WO 98 03558 A (DOW CHEMICAL CO) 29 janvier 1998 (1998-01-29) <br> * revendications 1,2 * <br> * page 18, ligne 16 - ligne 21 * | 1 | |

Le présent rapport a été établi pour toutes les revendications

| Lieu de la recherche | Date d'achèvement de la recherche | Examinateur |
|---|---|---|
| LA HAYE | 20 juin 2000 | Fischer, B |

**ANNEXE AU RAPPORT DE RECHERCHE EUROPEENNE
RELATIF A LA DEMANDE DE BREVET EUROPEEN NO.**

EP 00 20 0846

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

20-06-2000

| Document brevet cité au rapport de recherche | | Date de publication | Membre(s) de la famille de brevet(s) | | | Date de publication |
|---|---|---|---|---|---|---|
| EP 0314797 | A | 10-05-1989 | CA | 1325629 | A | 28-12-1993 |
| | | | JP | 1009206 | A | 12-01-1989 |
| | | | JP | 7094498 | B | 11-10-1995 |
| | | | JP | 2059114 | C | 10-06-1996 |
| | | | JP | 7094499 | B | 11-10-1995 |
| | | | JP | 63260903 | A | 27-10-1988 |
| | | | WO | 8808432 | A | 03-11-1988 |
| | | | US | 5122491 | A | 16-06-1992 |
| | | | US | 5206199 | A | 27-04-1993 |
| | | | CA | 1324124 | A | 09-11-1993 |
| | | | DE | 3855955 | D | 07-08-1997 |
| | | | DE | 3855955 | T | 20-11-1997 |
| | | | KR | 9202769 | B | 03-04-1992 |
| | | | AT | 154943 | T | 15-07-1997 |
| | | | CN | 1034547 | A,B | 09-08-1989 |
| | | | CN | 1020735 | B | 19-05-1993 |
| US 5756613 | A | 26-05-1998 | BE | 1007040 | A | 28-02-1995 |
| | | | AT | 178617 | T | 15-04-1999 |
| | | | AU | 681125 | B | 21-08-1997 |
| | | | AU | 6322594 | A | 01-12-1994 |
| | | | BR | 9402065 | A | 20-12-1994 |
| | | | CA | 2124176 | A | 26-11-1994 |
| | | | CN | 1100343 | A | 22-03-1995 |
| | | | CZ | 9401270 | A | 15-12-1994 |
| | | | DE | 69417621 | D | 12-05-1999 |
| | | | DE | 69417621 | T | 21-10-1999 |
| | | | EP | 0627447 | A | 07-12-1994 |
| | | | ES | 2132322 | T | 16-08-1999 |
| | | | FI | 942427 | A | 26-11-1994 |
| | | | HU | 69050 | A | 28-08-1995 |
| | | | JP | 6329715 | A | 29-11-1994 |
| | | | NO | 941923 | A | 28-11-1994 |
| | | | RO | 112875 | A | 30-01-1998 |
| | | | SK | 60594 | A | 08-02-1995 |
| | | | US | 5556893 | A | 17-09-1996 |
| | | | ZA | 9403656 | A | 26-01-1995 |
| JP 10036423 | A | 10-02-1998 | AUCUN | | | |
| WO 9510546 | A | 20-04-1995 | BE | 1007614 | A | 22-08-1995 |
| | | | AU | 1078195 | A | 04-05-1995 |
| | | | BR | 9407786 | A | 18-03-1997 |
| | | | CA | 2173745 | A | 12-04-1995 |
| | | | CN | 1133051 | A | 09-10-1996 |
| | | | DE | 69412275 | D | 10-09-1998 |

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.** EP 00 20 0846

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-06-2000

| Document brevet cité au rapport de recherche | Date de publication | Membre(s) de la famille de brevet(s) | | Date de publication |
|---|---|---|---|---|
| WO 9510546 A | | DE | 69412275 T | 29-04-1999 |
| | | EP | 0723558 A | 31-07-1996 |
| | | FI | 961575 A | 10-04-1996 |
| | | JP | 9503542 T | 08-04-1997 |
| | | NO | 961413 A | 07-06-1996 |
| WO 9803558 A | 29-01-1998 | AU | 718544 B | 13-04-2000 |
| | | AU | 3805197 A | 10-02-1998 |
| | | CA | 2261174 A | 29-01-1998 |
| | | CN | 1225644 A | 11-08-1999 |
| | | CZ | 9900239 A | 14-04-1999 |
| | | EP | 0914353 A | 12-05-1999 |
| | | PL | 331324 A | 05-07-1999 |

Pour tout renseignement concernant cette annexe : voir Journal Officiel de l'Office européen des brevets, No.12/82